# FASCICULE DE BREVET EUROPEEN

(11) **EP 2 832 119 B1**
(45) Date de publication et mention de la délivrance du brevet: **08.01.2020**
(21) Numéro de dépôt: 13720437.6
(22) Date de dépôt: 28.03.2013
(51) Int. Cl.: H04W 4/02, H04W 4/021, H04W 4/029

(54) **PROCEDE DE DELIVRANCE D'UN MESSAGE"LOCALISE"A UN TERMINAL D'UTILISATEUR DESTINATAIRE, PROCEDE DE TRAITEMENT, DISPOSITIFS ET PROGRAMMES D'ORDINATEURS ASSOCIES**
VERFAHREN ZUR ABGABE EINER LOKALISIERTEN NACHRICHT AN EIN ENDGERÄT EINES EMPFÄNGERBENUTZERS, ZUGEHÖRIGES BEARBEITUNGSVERFAHREN SOWIE ZUGEHÖRIGE VORRICHTUNGEN UND COMPUTERPROGRAMME
METHOD FOR DELIVERING A "LOCALISED" MESSAGE TO A TERMINAL OF A RECIPIENT USER, AND ASSOCIATED PROCESSING METHOD, DEVICES AND COMPUTER PROGRAMS

(30) Priorité: 30.03.2012 FR 1252926
(43) Date de publication de la demande: 04.02.2015
(73) Titulaire: Orange, 75015 Paris (FR)
(72) Inventeur: EVENNOU, Frédéric, F-38100 Grenoble (FR); MADILLO, Pierre, F-38210 Vourey (FR); RUFFIN, Arnaud, 38000 Grenoble (FR)
(74) Mandataire: Cabinet Beau de Loménie
(86) Numéro de dépôt international: PCT/FR2013/050675
(87) Numéro de publication internationale: WO 2013/144515

(56) Documents cités:
- WO-A1-2004/004372
- US-A1- 2004 198 389
- US-A1- 2008 070 588

## Description

### 1. Domaine de l'invention

Le domaine de l'invention est celui des réseaux mobiles ou sans fil, plus précisément de la transmission d'un message à un terminal d'utilisateur destinataire en fonction de la localisation de ce dernier.

Un message dit « localisé » ou « géolocalisé » est un message, généralement court, de type SMS (pour « Short Message Service », en anglais), MMS (pour « Multimedia Message Service », en anglais) ou autre, comprenant éventuellement un contenu multimédia de type image, son, photo ou vidéo, auquel on associe une zone géographique de délivrance. Un tel message est donc destiné à être délivré à son destinataire, lorsque ce dernier se trouve localisé dans cette zone. A titre d'exemple d'application, il peut comprendre une liste de courses à faire et sa zone géographique englobe la position géographique de proximité du supermarché. L'utilisateur destinataire reçoit le message lorsqu'il passe à côté du supermarché.

La délivrance d'un tel message à son destinataire s'appuie sur la fourniture par le terminal mobile de cet utilisateur d'informations relatives à sa localisation. Aujourd'hui, les terminaux mobiles sont nativement équipés de moyens de localisation, qu'ils soient basés sur une technologie de triangulation GSM (pour « Global System for Mobile communication », en anglais) qui donne lieu à une information de localisation dont la précision est de plusieurs centaines de mètres ou sur une technologie de type GPS (pour « Global Positioning System », en anglais) dont la précision est de l'ordre de quelques dizaines de mètres.

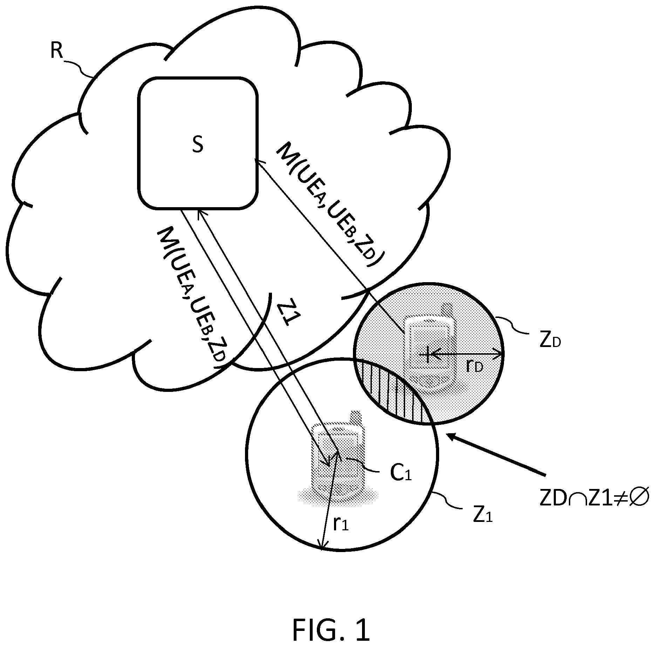

On connaît du brevet américain publié US 7,813, 743 B1 un système de transmission de tels messages dans un réseau mobile. En relation avec la **Figure 1****,** un serveur central S obtient d'une part d'un terminal d'utilisateur participant UE_{B} des informations Z1 représentatives de sa localisation géographique, d'autre part reçoit des messages M en provenance d'un terminal d'utilisateur UE_{A} participant à destination de du terminal UE_{B}. De tels messages comprennent une information représentative de leur zone géographique de délivrance Z_{D}. Lorsque le serveur central S établit que le terminal d'utilisateur destinataire UE_{B} du message localisé M entre dans la zone de délivrance Z_{D} de ce message, il déclenche la transmission de ce message au terminal UE_{B}.

On connait du document WO2004/004372 une solution pour initier des applications dépendantes de la localisation sur un terminal mobile. Des points d'intérêt et des actions associées à une zone géographique sont transmises au terminal mobile qui les stocke et les déclenche lorsqu'il entre dans la zone géographique. Par exemple, une action possible est de lui présenter un message.

Selon le document US2008/0070588, un serveur transmet les points d'intérêt au terminal de l'utilisateur en fonction d'une information de localisation grossière envoyée par le terminal au serveur et le terminal décide quand présenter les messages à l'utilisateur en fonction d'une information de position fine.

Selon le document US2004/0198389, le serveur diffuse les points d'intérêts au terminal mobile, lequel analyse sur la base d'informations de « tags » géographiques contenus dans l'en-tête s'il est pertinent d'extraire le contenu utile reçu pour le présenter à l'utilisateur.

On comprend que les terminaux participants doivent activer en permanence leurs moyens de localisation, afin d'être en mesure de fournir périodiquement une information de localisation géographique mise à jour au niveau du serveur centrai S. Au surplus, l'information de localisation Z₁ fournie doit être suffisamment précise pour permettre au serveur de déterminer avec une marge d'erreur raisonnable si le terminal destinataire UE_{B} se trouve ou non dans la zone de délivrance du message et, par conséquent de délivrer de façon pertinente le message localisé. Dans le document US 7,813, 743 B1, une telle zone est définie par une position géographique c₁ et un rayon r₁ associé, lequel correspond à l'erreur de localisation. En pratique, cela signifie que le terminal participant UE_{B} doit activer en permanence des moyens de localisation type GPS, qui lui fournissent une indication de sa localisation avec une erreur de localisation de l'ordre de quelques dizaines de mètres.

### 2. Inconvénients de l'art antérieur

Un premier inconvénient d'un tel système est d'être coûteux en ressources, aussi bien pour le réseau, qui doit véhiculer les informations de localisation des terminaux participants, que pour les terminaux, qui maintiennent leurs moyens de localisation les plus précis et les plus consommateurs en énergie activés en permanence.

Un deuxième inconvénient de ce système est d'être peu respectueux de la vie privée des participants dont le moindre déplacement est tracé par le serveur central.

### 3. Objectifs de l'invention

L'invention vise une solution de délivrance de messages localisés qui ne présente pas ces inconvénients.

### 4. Exposé de l'invention

L'invention concerne un procédé de délivrance d'au moins un message dit « localisé » selon la revendication 1.

Avec l'invention, le procédé de délivrance d'un message localisé est mis en œuvre dans le terminal de l'utilisateur. Il en résulte que les informations de localisation du terminal destinataire n'ont plus besoin d'être transmises à un serveur central du réseau de télécommunications. Les ressources en bande passante s'en trouvent donc économisées.

De ce fait, le serveur central n'étant plus informé en permanence de la localisation de l'utilisateur, la vie privée de ce dernier s'en trouve mieux respectée.

Ainsi, l'invention repose sur une approche tout à fait nouvelle et inventive de la délivrance d'un message localisé à un terminal d'utilisateur destinataire, selon laquelle la décision de livraison du contenu d'un message localisé à un utilisateur destinataire est prise par le terminal de cet utilisateur, en fonction de la localisation géographique de l'utilisateur par rapport à la zone de délivrance associée au message. Une telle approche permet de limiter les échanges avec le serveur au minimum et de n'informer ce dernier de la position géographique de l'utilisateur que lorsque ce dernier est entré dans la zone de délivrance du message localisé qui lui est destiné.

Lorsque ladite intersection n'est pas vide, ledit procédé comprend une étape d'obtention d'une deuxième zone de localisation du terminal, plus précise que la première, et la livraison du contenu est mise en œuvre lorsqu'une intersection entre la deuxième zone de localisation du terminal obtenue et la zone géographique de délivrance du message n'est pas vide.

Avantageusement, le procédé de transmission d'un message localisé selon l'invention s'appuie en priorité sur des moyens de localisation grossière du terminal, par exemple de type triangulation GSM, plutôt économes en termes de consommation énergétique, pour évaluer si le terminal destinataire du message localisé se trouve à proximité de la zone de délivrance de ce message. Les deuxièmes moyens de localisation du terminal, par exemple de type GPS, sont aptes à fournir une zone de localisation plus précise du terminal. Comme ils sont beaucoup plus coûteux en ressources énergétiques, ils ne sont activés qu'en cas d'évaluation positive. Les ressources énergétiques du terminal sont donc préservées.

Le procédé comprend une étape de désactivation des deuxièmes moyens de localisation, lorsque la zone de délivrance dudit au moins un message et la première zone de localisation du terminal présentent une intersection vide.

Avantageusement, les moyens de localisation fine du terminal sont désactivés dès qu'il est établi que le terminal s'est éloigné de la zone de délivrance du message localisé et que plus aucun message ne se trouve dans la zone de localisation grossière du terminal. Ainsi, les ressources énergétiques du terminal sont économisées.

Selon un autre aspect de l'invention, ladite au moins une information représentative de la zone de délivrance dudit au moins un message est obtenue lors d'une étape préalable de réception d'au moins un en-tête de message, comprenant ladite information. A titre d'exemple, une telle information comprend une position géographique et un rayon, représentatif d'une erreur de mesure. La zone de délivrance est dans ce cas représentée sous la forme d'un disque.

Avantageusement, seul l'en-tête du message localisé, comprenant l'information représentative d'une zone de délivrance associée à ce message, est transmis systématiquement au terminal de l'utilisateur par le serveur central. Ceci permet de ne déclencher aucun transfert inutile du contenu du message, plus volumineux et donc plus coûteux en termes de ressources de bande passante que celui de l'en-tête, tant qu'il n'a pas été établi que l'utilisateur est entré dans la zone de délivrance de ce message.

Selon un aspect de l'invention, ledit procédé met en oeuvre une étape de requête de transfert du contenu dudit au moins un message auprès d'un serveur central à destination du terminal, lorsque l'intersection entre la zone de délivrance du message et la deuxième zone de localisation du terminal n'est pas vide.

La transmission du contenu du message localisé au terminal de l'utilisateur n'est requise du serveur central que lorsqu'il a été établi avec une précision fine que le terminal de l'utilisateur était entré dans la zone de délivrance du message. Un avantage est de limiter le transfert de données plus volumineuses, telles que le contenu du message, au strict nécessaire.

Selon un aspect non couvert par l'invention, ledit procédé met en œuvre une étape de requête de transfert du contenu dudit au moins un message auprès d'un serveur central du réseau de télécommunications à destination du terminal, lorsque l'intersection entre la zone de délivrance du message et la première zone de localisation du terminal n'est pas vide.

Selon cet aspect non couvert par l'invention, la transmission du contenu du message localisé est requise du serveur central dès qu'il a été établi avec une précision grossière que le terminal de l'utilisateur est entré dans la zone de délivrance du message. Un avantage est d'anticiper le transfert de données afin de garantir que le message sera délivré de façon pertinente à l'utilisateur. En effet, du fait que le contenu est déjà chargé dans le terminal, ce mode de réalisation est plus réactif et offre plus de garanties quant à une livraison du contenu à l'utilisateur au moment où il est localisé dans la zone de délivrance du message localisé. Ceci présente d'autant plus d'intérêt que l'utilisateur se déplace rapidement.

Selon un autre aspect de l'invention, l'étape d'obtention d'au moins une information représentative de la zone de délivrance associée audit au moins un message localisé comprend une étape d'obtention d'une liste comprenant une pluralité d'en-têtes de messages localisés destinés audit utilisateur.

L'avantage est de regrouper toutes les zones de délivrances des messages localisés destinés à l'utilisateur du terminal destinataire dans un même message comprenant ladite liste. Ainsi, le terminal d'utilisateur récupère toutes les zones de délivrance des messages destinés à l'utilisateur en un seul échange avec le serveur, ce qui permet d'optimiser les ressources.

L'invention concerne aussi un dispositif de délivrance d'un message localisé selon la revendication 3.. Ce dispositif pourra bien sûr comporter les différentes caractéristiques relatives au procédé de délivrance d'au moins un message localisé selon l'invention.

Un tel dispositif est apte à être intégré à un terminal d'utilisateur, par exemple un terminal mobile, de type téléphone intelligent (pour « smartphone », en anglais).

L'invention concerne donc également un terminal d'utilisateur comprenant le dispositif de délivrance d'un message localisé qui vient d'être décrit.

L'invention concerne aussi un procédé de traitement d'au moins un message localisé selon la revendication 5.

Avantageusement, un tel procédé est mis en œuvre par un dispositif destiné à être intégré dans un serveur central du réseau de télécommunications.

L'invention concerne donc aussi un dispositif de traitement d'au moins un message localisé selon la revendication 6.

Ce dispositif pourra bien sûr comporter les différentes caractéristiques relatives au procédé de traitement d'au moins un message localisé selon l'invention.

L'invention concerne également un serveur central d'un réseau de télécommunications comprenant un tel dispositif de traitement d'un message « localisé ».

L'invention concerne en outre un système de gestion d'au moins un message localisé, comprenant un tel serveur central et au moins deux terminaux d'utilisateurs qui viennent d'être décrits.

L'invention concerne aussi un programme d'ordinateur comportant des instructions pour la mise en œuvre d'un procédé de traitement tels que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention concerne enfin un programme d'ordinateur comportant des instructions pour la mise en œuvre d'un procédé de gestion tels que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 illustre de façon schématique un exemple de réseau de communication mobile mettant en œuvre un service de livraison de messages localisés selon l'art antérieur;
- la figure 2 présente de façon schématique un exemple de réseau mobile mettant en œuvre un service de délivrance de messages localisés selon un premier mode de réalisation de l'invention ;
- la figure 3 présente de façon schématique un exemple de réseau mobile mettant en œuvre un service de délivrance de messages localisés selon un deuxième mode de réalisation de l'invention ;
- la figure 4 présente de façon schématique les étapes du procédé de délivrance d'au moins un message localisé selon un mode de réalisation de l'invention ;
- la figure 5 présente de façon schématique les étapes du procédé de traitement d'un message localisé selon un mode de réalisation de l'invention ;
- la figure 6 présente de façon schématique les échanges de messages entre un utilisateur, un terminal de l'utilisateur et un serveur de messages localisés selon l'invention ;
- la figure 7 présente de façon schématique un exemple de structure d'un dispositif de délivrance d'au moins un message localisé selon l'invention ; et
- la figure 8 présente de façon schématique un exemple de structure d'un dispositif de traitement d'au moins un message localisé selon l'invention.

### 6. Description d'un mode de réalisation particulier de l'invention

Le principe général de l'invention repose sur un contrôle par un terminal d'un utilisateur de la délivrance du contenu d'un message localisé destiné à cet utilisateur permettant d'optimiser l'utilisation des ressources de ce terminal et du réseau de télécommunications auquel ce dernier est connecté.

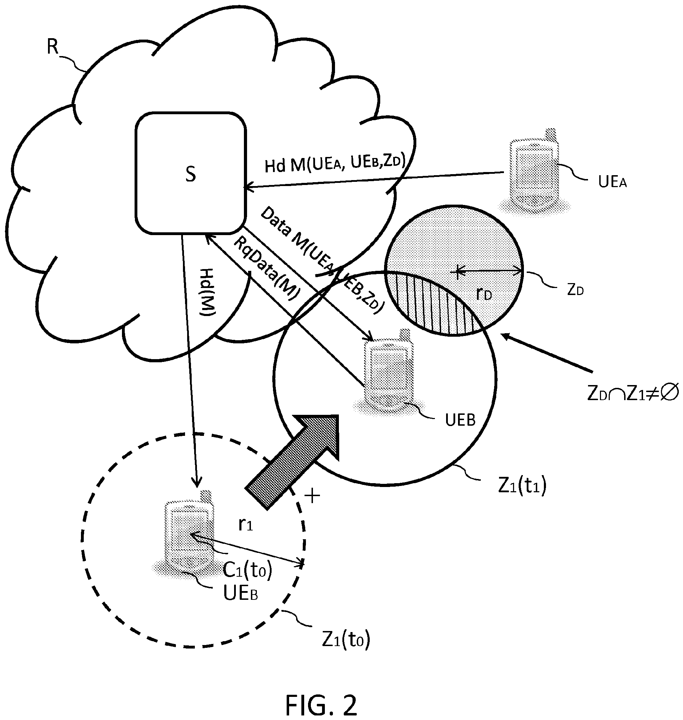

En relation avec la **Figure 2****,** on considère un réseau de télécommunications mobiles R, par exemple de type GSM, conformes aux versions 2G, 3G , 4G et suivantes de la norme 3GPP, ou encore un réseau d'accès sans fil de type WIFI à un réseau de télécommunications IP, ou enfin un réseau de télécommunications sans fil conforme à toute autre norme et apte à mettre en œuvre un service de dépôt et de délivrance de messages localisés selon l'invention. Dans cet exemple, deux terminaux d'utilisateurs UE_{A} et UE_{B} participent au service.

Le réseau R comprend un serveur S apte à traiter un message localisé M destiné au terminal d'utilisateur UE_{B} et déposé par le terminal d'utilisateur UE_{A}. Ce message localisé M est associé à une zone géographique de délivrance Z_{D}, qu'on a représenté ici , à titre d'exemple non limitatif, sous la forme d'un disque de centre C_{D} et de rayon r_{D}. On notera que cette zone géographique Z_{D} ne correspond pas nécessairement à la localisation du terminal UE_{A} à l'instant où il dépose le message M.

Le message M comprend un en-tête HD et des données utiles Data. L'en-tête HD comprend des informations relatives au terminal d'utilisateur destinataire UE_{B}, telles que par exemple une adresse IP ou un numéro de téléphone et des informations représentatives de la zone de délivrance Z_{D} du message M, telles que les coordonnées géographiques du centre C_{D} et le rayon r_{D}.

Les terminaux UE_{A} et UE_{B} sont des terminaux mobiles, par exemple de type smartphone ou tablette, qui disposent intrinsèquement de moyens de localisation géographique. Classiquement, de tels moyens sont aptes à délivrer une position géographique, avec une précision qui dépend de la technique utilisée.

A un instant t₀, le terminal d'utilisateur UE_{B} s'est localisé dans une zone Z₁(t₀) centrée sur la position C₁(t₀) et de rayon r₁(t₀) correspondant à la précision de la technique utilisée. Cette zone Z₁ a une intersection vide avec la zone de localisation Z_{D} du message M. Le terminal UE_{B} ne délivre donc pas le message à son utilisateur B.

A un instant t₁, le terminal d'utilisateur UE_{B} s'est déplacé dans une zone Z₁(t₁) centrée sur la position C₁(t₁) et de rayon r₁(t₁). Cette zone Z₁(t₁) a maintenant une intersection non vide avec la zone de délivrance ZD associée au message M. Le terminal UEB déclenche alors la délivrance des données utiles du messages M à son utilisateur. Dans ce but, il envoie une requête RqData(M) au serveur S en vue d'obtenir les données utiles du message M, puis, une fois qu'il les a reçues les présente à l'utilisateur B.

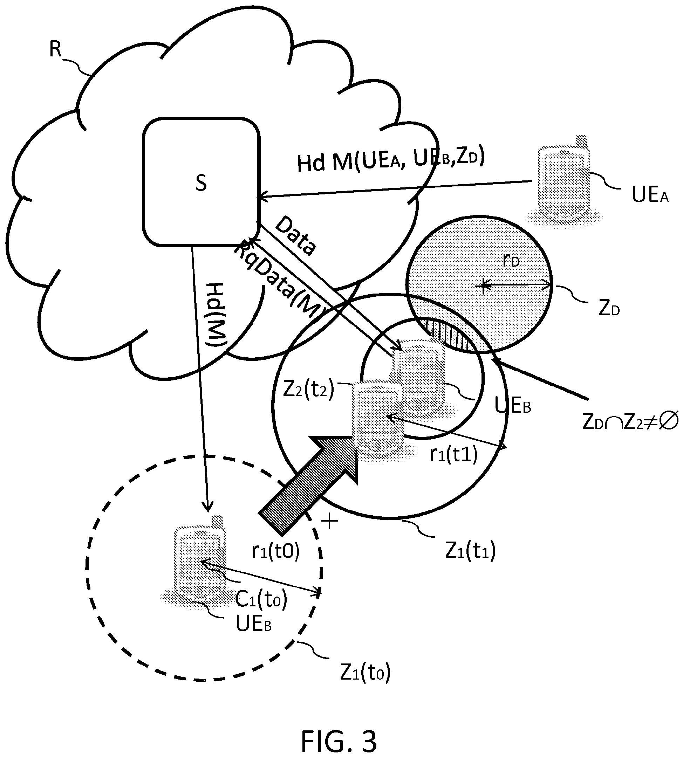

En relation avec la **Figure 3****,** on présente maintenant un autre exemple de mise en œuvre de l'invention dans le réseau R. Dans cet exemple on considère que le terminal d'utilisateur UE_{B} comprend au moins deux moyens de localisation géographique, des premiers moyens aptes à fournir des informations représentatives d'une zone de localisation grossière Z₁ du terminal et des seconds moyens aptes à fournir des informations représentatives d'une zone de localisation fine Z₂ du terminal. Par exemple, les premiers moyens de localisation utilisent une technique de triangulation GSM et les deuxièmes moyens de localisation sont basées sur une technique de type GPS.

Le terminal d'utilisateur UE_{B}, lorsqu'il participe au service de délivrance de messages localisés, commence par activer ses moyens de localisation grossière. Comme dans l'exemple précédent, il obtient en t₁ une zone de localisation Z₁(t₁) qui possède une intersection non vide avec la zone de délivrance Z_{D} du message M. Selon ce mode de réalisation de l'invention, il déclenche alors ses moyens de localisation fine, qui lui fournissent à l'instant t₂ une zone de localisation Z₂(t₂). Il vérifie alors que l'intersection entre cette zone Z₂(t₂) et la zone de délivrance Z_{D} du message M n'est pas vide. Si tel est le cas, il requiert le contenu du message M auprès du serveur S et le présente à l'utilisateur.

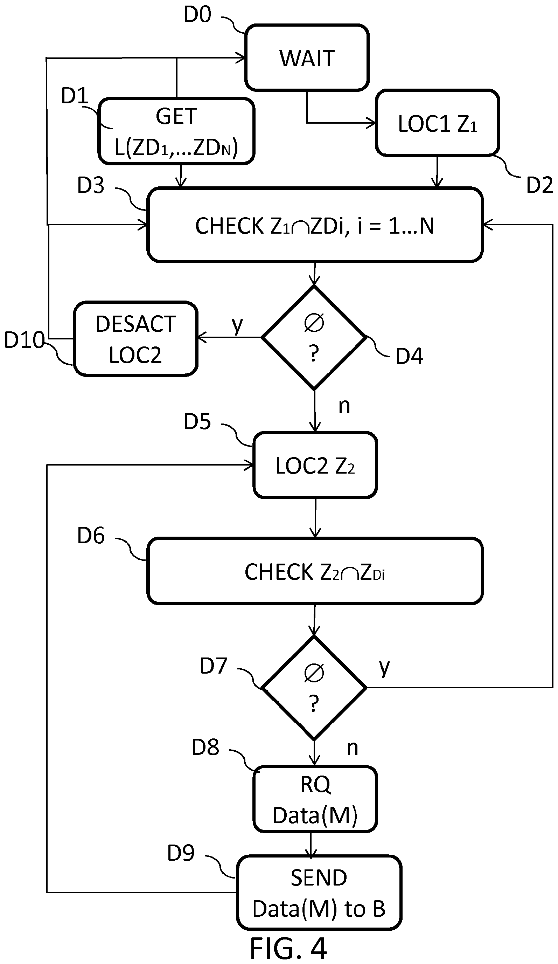

On présente maintenant, en relation avec la **Figure 4****,** les étapes du procédé de délivrance d'un message localisé à un terminal d'utilisateur selon un mode de réalisation de l'invention.

Avantageusement, ce procédé est mis en œuvre par un terminal d'utilisateur, par exemple le terminal UE_{B}. On suppose que l'utilisateur du terminal UE_{B} s'est connecté au service, par exemple en lançant une application logicielle sur son terminal. Le lancement de cette application a pu déclencher l'ouverture d'une connexion permanente entre le terminal UE_{B} et le serveur S.

Une fois la connexion établie, le procédé se met alors dans une première étape D0 d'attente d'un événement déclencheur.

Un tel événement déclencheur comprend notamment :
- Le dépôt Evt1 par au moins un autre terminal d'utilisateur connecté d'au moins un message destiné à l'utilisateur du terminal UE_{B} ;
- Le dépôt par l'utilisateur B d'au moins un message destiné à un autre utilisateur, par exemple l'utilisateur A du terminal UE_{A} ;
- l'arrêt du service par l'utilisateur B.

On suppose que l'événement déclencheur est le dépôt par un autre utilisateur connecté au service, par exemple l'utilisateur A, d'au moins un message M destiné à l'utilisateur B.

Au cours d'une étape D1, le terminal UE_{B} obtient du serveur S au moins la zone de localisation Z_{D} associée au message M.

Il peut recevoir du serveur S le message M complet ou bien seulement le header HD(M) de ce message comprenant les informations relatives à la zone géographique de localisation Z_{D} qui lui est associée.

Lors de la connexion au serveur S, le terminal UE_{B} peut aussi recevoir une liste L d'informations relatives aux zones de localisation ZD₁ à ZD_{N} d'une pluralités de messages localisés M₁ à M_{N}, avec N entier supérieur ou égal à 2, qui lui sont destinés. Dans la suite, on désignera le message courant par Mi, i étant un entier compris entre 1 et N.

Suite à l'étape D1, le terminal UE_{B} active en D2 ses premiers moyens de localisation LOC₁ en vue d'obtenir une première zone géographique Z₁ représentative d'une localisation grossière du terminal UE_{B}.

Au cours d'une étape D3, il détermine pour chaque message Mᵢ une intersection entre la zone de délivrance Z_{Di} associée à ce message et sa propre zone de localisation grossière Zᵢ.

Si l'intersection déterminée est vide pour tous les messages de la liste reçue, le terminal UE_{B} décide en D4 de se placer de nouveau en attente D0 d'un nouvel événement déclencheur. Parmi les événements déclencheurs, on compte à ce stade, en plus des événements listés précédemment, l'obtention Evt2 d'une nouvelle zone de localisation grossière Z₁ à un instant suivant. Dans ce dernier cas, le terminal UE_{B} relance la mise en œuvre des étapes D3 et D4 du procédé selon l'invention.

Si au contraire l'intersection déterminée n'est pas vide, le terminal UE_{B} active en D5 ses deuxièmes moyens de localisation LOC₂ en vue d'obtenir une deuxième zone géographique Z₂ représentative d'une localisation fine du terminal.

Au cours d'une étape D6, il détermine pour chaque message M₁ à M_{N} une intersection entre la zone de délivrance Z_{Di} associée à ce message et sa zone de localisation fine Z₂.

Si l'intersection déterminée n'est pas vide pour au moins un message Mᵢ, le terminal UE_{B} décide en D7 de déclencher la délivrance du contenu du message Mᵢ, c'est-à-dire de ses données utiles Dataᵢ à l'utilisateur,

S'il n'a reçu en D1 que l'en-tête HDᵢ du message Mᵢ, il requiert au préalable, en D8 le transfert des données utiles Dataᵢ de ce message auprès du serveur S. Ce transfert est avantageusement réalisé via la connexion permanente établie avec le serveur S lors du lancement de l'application sur le terminal UE_{B}.

Une fois le message présenté à l'utilisateur, le terminal UE_{B} envoie un message Ack(Mᵢ) d'accusé-réception au serveur S, afin que ce dernier puisse marquer ce message Mᵢ comme lu ou encore le supprimer de sa base de données.

Si l'intersection déterminée en D6 est vide pour tous les messages de la liste reçue, le terminal se place comme dans le cas précédent en attente D0 d'un nouvel événement déclencheur.

On suppose que le prochain événement déclencheur est l'obtention d'une mise à jour Evt₂ des informations de localisation grossière Z₁. Dans ce cas, le terminal UE_{B} met de nouveau en œuvre les étapes D3 et D4 du procédé pour la liste de messages M₁ à M_{N} obtenue. Si aucun des messages reçus n'est dans la zone de localisation grossière Z₁ du terminal UE_{B}, le terminal UE_{B} désactive en D10 ses deuxièmes moyens de localisation.

Selon une variante du mode de réalisation qui vient d'être décrit, le terminal UE_{B} déclenche le transfert D8 du contenu du message Mᵢ dès qu'il a établi que ce message Mᵢ se trouve dans sa zone de localisation grossière Z₁, c'est-à-dire à l'issue de l'étape D4. Il ne le présente ensuite à l'utilisateur que lorsque l'intersection entre la zone de localisation fine Z₂ du terminal et la zone de délivrance Z_{Di} du message Mᵢ n'est pas vide.

Dans cette attente, les données utiles Dataᵢ sont stockées dans une mémoire du terminal UE_{B}. Elles sont ensuite chargées dans un mémoire RAM du terminal sur simple requête interne auprès de cette mémoire puis restituées à l'utilisateur sur des moyens de restitution intégrés au terminal, par exemple des moyens d'affichage tels qu'un écran.

Un avantage de cette variante est pour le terminal de s'assurer d'avoir le contenu du message Mi à sa disposition dès qu'il entre dans la zone de localisation ZD de ce message. Ainsi, il se prémunit contre tout risque de délivrance tardive d'un message devenu obsolète à cause d'un déplacement très rapide de l'utilisateur B, lequel se trouve par exemple à bord d'un véhicule motorisé.

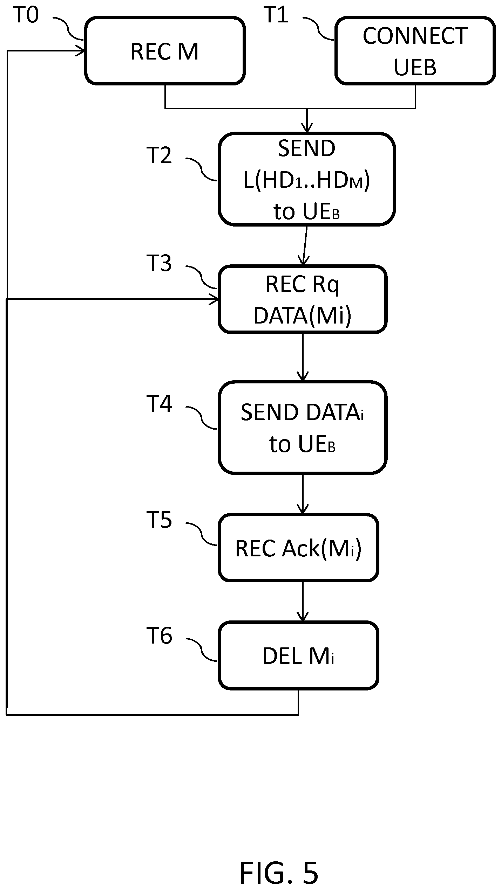

On présente maintenant, en relation avec la **Figure 5** les étapes du procédé de traitement d'un message localisé selon l'invention. Un tel procédé est avantageusement mis en œuvre par le serveur central S.

On suppose que le serveur S a reçu dans une étape préalable T0 un ou plusieurs messages localisés M₁ à M_{N} avec N entier supérieur ou égal à 1 en provenance d'un ou plusieurs terminaux d'utilisateurs UE_{A} et à destination du terminal d'utilisateur UE_{B}.

Sur réception d'une requête de connexion en provenance du terminal d'utilisateur UE_{B} du réseau de communications R, le serveur S crée en T1 une connexion avec le terminal UE_{B} demandeur. Dès la connexion établie, il envoie au terminal UE_{B}, au cours d'une étape T2, une liste comprenant au moins les zones de localisation Z_{D1} à Z_{DN} associées aux messages localisés déposés par d'autres terminaux utilisateurs, tels que UE_{A} et destinés à l'utilisateur B.

Comme déjà évoqué, la liste L peut comprendre des informations relatives à un ou plusieurs messages localisés M₁ à M_{N}, avec N entier supérieur ou égal à 2. Ces informations peuvent comprendre le ou les messages M₁ à M_{N} dans leur intégralité, c'est-à-dire pour un message Mᵢ, i entier compris entre 1 et N, son en-tête H_{Di} et données utiles Dataᵢ, ou bien, selon une variante, seulement son en-tête H_{Di} comprenant la zone de localisation Z_{Di} associée. Un avantage de la liste d'en-têtes est sa petite taille relative, qui la rend peu coûteuse à transmettre au terminal, les contenus ou données utiles des messages localisés de cette liste n'étant effectivement transférés que lorsque le terminal d'utilisateur destinataire UE_{B} entre dans leurs zones de localisation Z_{Di} respectives.

Dans la suite de la description de cet exemple, nous considérerons le cas de cette variante.

En T3, le serveur S reçoit du terminal d'utilisateur UEB une requête Req Datai de transfert des données utiles associées à un message localisé Mi faisant partie de la liste L. Il lui envoie en T4 les données utiles du message via la connexion établie avec ce terminal d'utilisateur UEB, afin que ce dernier puisse présenter le contenu du message Mᵢ à son utilisateur B. Il marque le message Mᵢ comme lu dans la liste L

En T5, le serveur S reçoit un message Ack(Mi) d'accusé-réception en provenance du terminal d'utilisateur UE_{B}. Il peut en T6 marquer lui aussi comme lu le message Mi en question et éventuellement le supprimer de sa base de données BD.

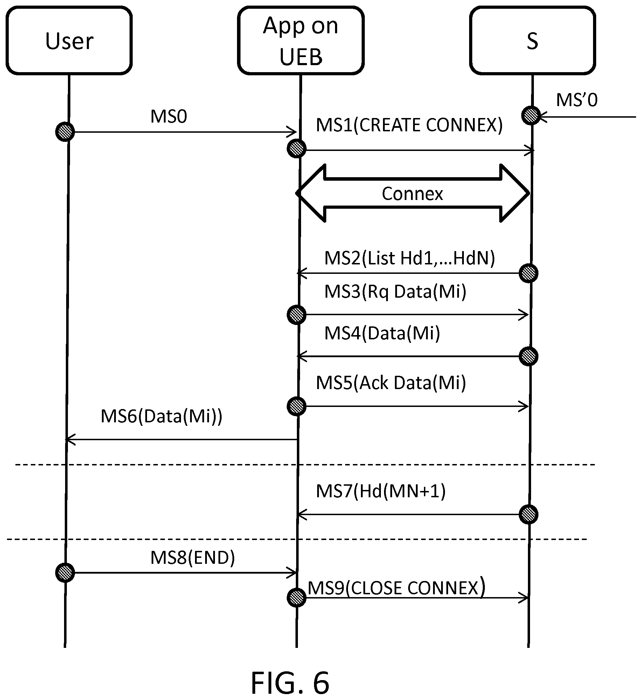

On présente maintenant, en relation avec la **Figure 6****,** un exemple d'échange de messages entre l'utilisateur B, le terminal UE_{B} et le serveur S selon un mode de réalisation de l'invention.

L'utilisateur B démarre le service sur son terminal UE_{B}, par exemple en lançant une application logicielle à l'aide d'une action MS₀ sur une interface, par exemple tactile de son terminal UE_{B}. Une fois lancée, cette application émet une requête de connexion au serveur S, sous la forme d'un message MS₁. L'application du terminal UE_{B} se place ensuite en attente d'un événement déclencheur, parmi lesquels on compte au moins:
- la réception d'un ou plusieurs en-têtes de messages localisés en provenance du serveur S, comprenant la ou les zones de localisation associées à ces messages ;
- l'entrée de l'utilisateur dans une zone de localisation reçue ;
- la demande d'arrêt de l'application par l'utilisateur B.

Le serveur S crée une connexion permanente identifiée par un identifiant de l'utilisateur B. Il consulte ensuite sa base de données en vue d'obtenir une liste des messages localisés M₁ à M_{N} non lus et destinés à l'utilisateur B, qui lui ont été déposés depuis la dernière connexion de cet utilisateur, par exemple dans un ou plusieurs messages MS'0. Il envoie ensuite la liste L obtenue au terminal UE_{B} dans un message MS₂. Cette liste comprend au moins les zones de localisation Z_{D1} à Z_{DN} associées aux messages M1 à M_{N}.

Sinon, s'il n'a rien reçu au préalable, il se place en attente de réception de messages localisés destinés à l'utilisateur B.

Dans la suite, on considère le cas où le serveur S a préalablement reçu une liste L.

### 1- Réception d'une liste L d'en-têtes de messages localisés

La réception de la liste L du message MS2 par le terminal UE_{B} déclenche l'activation par ce dernier de ses premiers moyens de localisation LOC₁. Avec la localisation Z₁ obtenue, l'application détermine d'abord grossièrement si l'utilisateur B se trouve dans la zone de localisation Z_{Di} d'un des messages localisés Mᵢ de la liste reçue. Si c'est le cas, elle active les moyens de localisation fine LOC₂ du terminal UE_{B} pour déterminer plus finement si l'utilisateur B est bien entré dans la zone de localisation Z_{Di} du message localisé Mᵢ en question. Si c'est le cas, elle envoie dans un message MS₃ une requête de transfert du contenu du message au serveur S via la connexion établie. Elle reçoit en retour un message MS₄ contenant les données utiles Dataᵢ demandées et les présente à l'utilisateur B. L'application accuse réception du contenu du message Mᵢ dans un message MS5. Elle marque le message comme lu et se place ensuite de nouveau en attente d'un autre événement déclencheur.

### 2- Mise à jour de la zone de localisation grossière du terminal

La réception d'une telle mise à jour déclenche la vérification par l'application de la nouvelle position du terminal par rapport aux zones de localisation des messages localisés reçus et non encore lus.

Si, au vu de la zone Z₁ de localisation mise à jour, le terminal ne se trouve à proximité d'aucun des messages non lus de la liste, l'application déclenche la désactivation des deuxièmes moyens de localisation, ce qui lui permet de préserver les ressources énergétiques du terminal UE_{B}. Elle se met ensuite en attente d'un nouvel événement déclencheur.

### 3- Réception d'un nouveau message M_{N+1} par le serveur S

Le serveur S, sur réception d'un nouveau message localisé destiné au terminal UE_{B} lui notifie son arrivée par l'envoi d'un message MS7 comprenant son en-tête H_{DN+1}.

La réception du message MS7 déclenche la mise en œuvre par l'application des étapes du procédé de délivrance d'un message localisé qui viennent d'être décrites.

### 4 - Demande d'arrêt de l"application par l'utilisateur

Sur réception d'une demande d'arrêt de l'application par l'utilisateur en MS8, l'application désactive les moyens de localisation grossière et fine du terminal. envoie un message MS9 de déconnexion au serveur S et stocke la liste de messages localisés non lus en mémoire. Le serveur met fin à la connexion permanente établie avec le terminal UE_{B}.

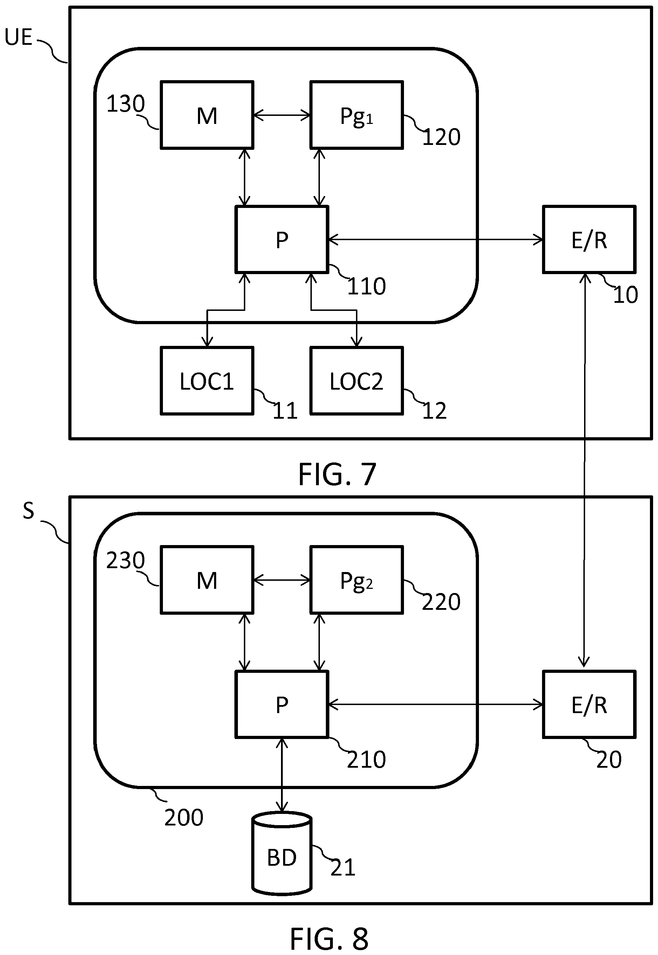

On présente finalement, en relation avec les **Figures 7 et 8****,** les structures simplifiées d'un dispositif 100 de délivrance d'un message localisé selon l'invention et d'un dispositif 200 de traitement d'un message localisé selon l'invention, mettant respectivement en œuvre un procédé de délivrance et un procédé de traitement selon l'un des modes de réalisation décrits ci-dessus.

Avantageusement, le dispositif 100 est intégré dans un terminal mobile UE selon l'invention.

Par exemple, le dispositif 100 comprend une unité de traitement 110, équipée par exemple d'un processeur P, et pilotée par un programme d'ordinateur Pg₁ 120, stocké dans une mémoire 130 et mettant en œuvre le procédé de délivrance d'un message localisé selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en œuvre les étapes du procédé de délivrance d'un message localisé décrit précédemment, selon les instructions du programme d'ordinateur 120.

Classiquement, le terminal UE comprend des moyens 10 d'émission/réception de signaux de communication sur le réseau de communication R, portant des messages, tels que des messages localisés. Il comprend aussi des premiers moyens 11 de localisation LOC1, mettant par exemple en œuvre une technique de localisation par triangulation GSM et des deuxièmes moyens 12 de localisation LOC₂ mettant par exemple en œuvre une technique de localisation par GPS. Ces moyens sont pilotés par le processeur de l'unité de traitement 110.

Avantageusement, l'unité de traitement 110 obtient selon l'invention des moyens d'émission/réception une liste comprenant au moins les zones de localisation ZD associés à des messages localisés destinés à l'utilisateur. Elle active les moyens de localisation 11, 12 en vue d'obtenir des informations représentatives d'une zone de localisation grossière ou fine du terminal. Elle commande aux moyens 10 d'émission/réception l'émission à destination du serveur S d'une requête de transfert du contenu d'un desdits messages localisés, lorsqu'elle a déterminé que l'utilisateur se trouve dans la zone de localisation de ce message.

Avantageusement, le dispositif 200 selon l'invention est intégré dans un serveur central S.

Par exemple, le dispositif 200 comprend une unité de traitement 210, équipée par exemple d'un processeur P, et pilotée par un programme d'ordinateur Pg2 220, stocké dans une mémoire 230 et mettant en œuvre le procédé de traitement d'au moins un message localisé selon l'invention.

A l'initialisation, les instructions de code du programme d'ordinateur Pg2 220 sont par exemple chargées dans une mémoire RAM avant d'être exécutées par le processeur de l'unité de traitement 210. Le processeur de l'unité de traitement 210 met en œuvre les étapes du procédé de traitement décrit précédemment, selon les instructions du programme d'ordinateur 220.

Classiquement, le serveur S comprend des moyens d'émission/réception 20 aptes à émettre et recevoir des signaux de communication portant des messages, tels que des messages localisés, dans le réseau de communications R. Il comprend en outre des moyens de stockage 21 des messages localisés qu'il traite, tels que par exemple une base de données BD.

Selon l'invention, ces moyens sont pilotés par le processeur de l'unité de traitement 210. Avantageusement l'unité de traitement 210 obtient de tels moyens des messages localisés déposés par des terminaux d'utilisateurs à destination d'autres terminaux d'utilisateur du réseau R et elle les stocke dans la base de données BD. Elle émet vers les terminaux destinataires, des listes de messages localisés comprenant au moins les zones de localisation Z_{D} associées à ces messages.

Elle reçoit aussi des requêtes de transfert de contenus de ces messages, auxquelles elle répond en interrogeant sa base de données BD en vue d'obtenir les messages requis et en envoyant leurs données utiles aux terminaux d'utilisateurs requérants.

Bien sûr d'autres modes de réalisation de l'invention peuvent être envisagés. Par exemple, l'invention peut être mise en œuvre dans un réseau de communication IP auquel les terminaux d'utilisateurs se connectent par l'intermédiaire d'un réseau d'accès sans fil de type WIFI.

## Revendications

1. Procédé de délivrance d'au moins un message (M) dit « localisé » à un destinataire utilisateur (B) d'un terminal (UE_{B}) connecté à un réseau de télécommunications (R), un tel message étant associé à une zone de délivrance (Z_{D}), ledit procédé étant **caractérisé en ce qu'**il comprend les étapes suivantes, mises en œuvre par le terminal du destinataire, ledit terminal comprenant des premiers moyens et des deuxièmes moyens de localisation :
- réception (D1) d'au moins un en-tête dudit au moins un message localisé (HD), ledit en-tête comprenant au moins une information représentative de la zone de délivrance associée audit au moins un message localisé;
- obtention (D2) d'une première zone de localisation (Z₁) du terminal de l'utilisateur à l'aide des premiers moyens de localisation dudit terminal ;
- lorsqu'une intersection entre la première zone de localisation du terminal et la zone de délivrance dudit au moins un message localisé n'est pas vide, obtention d'une deuxième zone de localisation (Z₂) du terminal, plus précise que la première,
- requête de transfert du contenu dudit au moins un message localisé auprès d'un serveur central d'un réseau de télécommunications à destination du terminal et livraison du contenu transféré par le serveur central, lorsqu'une intersection entre la deuxième zone de localisation du terminal obtenue et la zone géographique de délivrance du message localisé n'est pas vide; et
- désactivation (D10) des deuxièmes moyens de localisation, lorsque la zone de délivrance dudit au moins un message localisé et la première zone de localisation du terminal présentent une intersection vide.

2. Procédé de délivrance d'un message localisé selon la revendication **1, caractérisé en ce que** l'étape d'obtention d'au moins une information représentative de la zone de délivrance associée audit au moins un message localisé comprend une étape d'obtention d'une liste (L) comprenant une pluralité d'en-têtes de messages localisés destinés audit utilisateur.

3. Dispositif (100) de délivrance d'un message dit « localisé » à un destinataire utilisateur d'un terminal mobile connecté à un réseau de télécommunications, ledit terminal mobile comprenant des premiers moyens et des deuxièmes moyens de localisation dudit terminal, ledit dispositif étant **caractérisé en ce qu'**il comprend les moyens suivants, aptes à être mis en œuvre par le terminal du destinataire :
- réception (D1) d'au moins un en-tête dudit au moins message localisé (HD), ledit en-tête comprenant au moins une information représentative de la zone de délivrance associée audit au moins un message localisé;
- obtention d'une première zone de localisation du terminal de l'utilisateur à l'aide des premiers moyens de localisation dudit terminal
- lorsqu'une intersection entre la première zone de localisation du terminal et la zone de délivrance dudit au moins un message localisé n'est pas vide, obtention d'une deuxième zone de localisation (Z₂) du terminal, plus précise que la première,
- requête de transfert du contenu dudit au moins un message localisé auprès d'un serveur central d'un réseau de télécommunications à destination du terminal et livraison du contenu transféré par le serveur central, lorsqu'une intersection entre la deuxième zone de localisation du terminal obtenue et la zone géographique de délivrance du message localisé n'est pas vide; et
- désactivation (D10) des deuxièmes moyens de localisation, lorsque la zone de délivrance dudit au moins un message localisé et la première zone de localisation du terminal présentent une intersection vide.

4. Terminal d'utilisateur (UE_{B}) apte à être connecté à un réseau de télécommunications mobiles, **caractérisé en ce qu'**il comprend un dispositif (100) de délivrance d'un message localisé selon la revendication **3.**

5. Procédé de traitement d'au moins un message dit « localisé » destiné à un utilisateur d'un terminal mobile connecté à un réseau de télécommunications, ledit procédé étant destiné à être mis en œuvre par un serveur dudit réseau apte à recevoir ledit au moins un message localisé en provenance d'un terminal émetteur connecté audit réseau, **caractérisé en ce qu'**il comprend les étapes suivantes :
- envoi (T2) audit terminal mobile destinataire d'au moins un en-tête dudit au moins un message localisé (HD), ledit en-tête comprenant au moins une information représentative d'une zone de délivrance dudit au moins un message localisé ;
- sur réception d'une requête de transfert du contenu dudit au moins un message en provenance dudit terminal, transfert (T4) du contenu au terminal.

6. Dispositif (200) de traitement d'au moins un message dit « localisé » destiné à un utilisateur (B) d'un terminal (UE_{B}) connecté à un réseau de télécommunications (R), ledit dispositif étant destiné à être mis en œuvre par un serveur dudit réseau apte à recevoir ledit au moins un message localisé en provenance d'un terminal émetteur connecté audit réseau, **caractérisé en ce qu'**il comprend des moyens pour mettre en œuvre les étapes suivantes :
- envoi audit terminal mobile destinataire d'au moins un en-tête dudit au moins un message localisé (HD), ledit en-tête comprenant au moins une information représentative d'une zone de délivrance dudit au moins un message localisé ;
- sur réception d'une requête de transfert du contenu en provenance dudit terminal destinataire, transfert du contenu dudit au moins un message au terminal destinataire.

7. Serveur central d'un réseau de télécommunications, **caractérisé en ce qu'**il comprend un dispositif de traitement d'au moins un message localisé selon la revendication **6.**

8. Système de traitement d'au moins un message localisé destiné à un utilisateur d'un terminal d'utilisateur connecté à un réseau de télécommunications (R), ledit message étant reçu d'un terminal émetteur par un serveur central, **caractérisé en ce qu'**il comprend un serveur central conforme à la revendication **7** et au moins deux terminaux d'utilisateurs (UE_{A}, UE_{B}) conformes à la revendication **4.**

9. Programme d'ordinateur (Pg₁), **caractérisé en ce qu'**il comprend des instructions qui, lorsque le programme est exécuté par un ordinateur conduisent à la mise en œuvre des étapes du procédé de délivrance d'au moins un message localisé à un terminal d'utilisateur destinataire selon les revendications **1** à **3.**

10. Programme d'ordinateur (Pg₂), **caractérisé en ce qu'**il comprend des instructions qui, lorsque le programme est exécuté par un ordinateur, conduisent à la mise en œuvre des étapes du procédé de traitement d'au moins un message localisé destiné à un terminal d'utilisateur selon la revendication **5.**

## Patentansprüche

1. Verfahren zur Ausgabe mindestens einer "lokalisierten" Nachricht (M) an einen Empfängerbenutzer (B) eines mit einem Telekommunikationsnetz (R) verbundenen Endgeräts (UE_{B}), wobei eine solche Nachricht einer Ausgabezone (Z_{D}) zugeordnet ist und das Verfahren **dadurch gekennzeichnet ist, dass** es die folgenden Schritte aufweist, die vom Endgerät des Empfängers durchgeführt werden, wobei das Endgerät erste und zweite Lokalisierungsmittel aufweist:
- Empfangen (D1) von mindestens einem Kopf der mindestens einen lokalisierten Nachricht (HD), wobei der Kopf mindestens eine Information aufweist, die repräsentativ für die der mindestens einen lokalisierten Nachricht zugeordneten Ausgabezone ist;
- Erhalten (D2) einer ersten Lokalisierungszone (Z₁) des Endgeräts des Benutzers mithilfe der ersten Lokalisierungsmittel des Endgeräts;
- wenn eine Schnittmenge der ersten Lokalisierungszone des Endgeräts und der Ausgabezone der mindestens einen lokalisierten Nachricht nicht leer ist, Erhalten einer zweiten Ausgabezone (Z₂) des Endgeräts, die präziser als die erste ist,
- Anforderung zum Übertragen des Inhalts der mindestens einen lokalisierten Nachricht auf einem zentralen Server eines Telekommunikationsnetzes an das Endgerät und liefern des von dem zentralen Server übertragenen Inhalts, wenn eine Schnittmenge zwischen der zweiten erhalten Lokalisierungszone des Endgeräts und der geografische Ausgabezone der lokalisierten Nachricht nicht leer ist; und
- Deaktivieren (D10) der zweiten Lokalisierungsmittel, wenn die Ausgabezone der mindestens einen lokalisierten Nachricht und die erste Lokalisierungszone des Endgeräts eine leere Schnittmenge bilden.

2. Verfahren zu Ausgeben einer lokalisierten Nachricht nach Anspruch 1, **dadurch gekennzeichnet, dass** der Schritt zum Erhalten der mindestens einen Information, die repräsentativ für die der mindestens einen lokalisierten Nachricht zugeordneten Ausgabezone ist, einen Schritt zum Erhalten einer Liste (L) aufweist, die eine Vielzahl von Köpfen von lokalisierten Nachrichten aufweist, die für den Benutzer bestimmt sind.

3. Vorrichtung (100) zur Ausgabe einer "lokalisierten" Nachricht an einen Empfängerbenutzer eines mit einem Telekommunikationsnetz verbundenen mobilen Endgeräts, wobei das mobile Endgerät erste und zweite Mittel zur Lokalisierung des Endgeräts aufweist und die Vorrichtung **dadurch gekennzeichnet ist, dass** sie die folgenden Mittel aufweist, die zum Durchführen durch das Endgerät des Empfängers geeignet sind:
- Empfangen (D1) von mindestens einem Kopf der mindestens einen lokalisierten Nachricht (HD), wobei der Kopf mindestens eine Information aufweist, die repräsentativ für die der mindestens einen lokalisierten Nachricht zugeordneten Ausgabezone ist;
- Erhalten einer ersten Lokalisierungszone des Endgeräts des Benutzers mithilfe der ersten Lokalisierungsmittel des Endgeräts;
- wenn eine Schnittmenge der ersten Lokalisierungszone des Endgeräts und der Ausgabezone der mindestens einen lokalisierten Nachricht nicht leer ist, Erhalten einer zweiten Ausgabezone (Z₂) des Endgeräts, die präziser als die erste ist,
- Anforderung zum Übertragen des Inhalts der mindestens einen lokalisierten Nachricht auf einem zentralen Server eines Telekommunikationsnetzes an das Endgerät und liefern des von dem zentralen Server übertragenen Inhalts, wenn eine Schnittmenge zwischen der zweiten erhalten Lokalisierungszone des Endgeräts und der geografische Ausgabezone der lokalisierten Nachricht nicht leer ist; und
- Deaktivieren (D10) der zweiten Lokalisierungsmittel, wenn die Ausgabezone der mindestens einen lokalisierten Nachricht und die erste Lokalisierungszone des Endgeräts eine leere Schnittmenge bilden.

4. Benutzerendgerät (UE_{B}), das geeignet ist, mit einem mobilen Telekommunikationsnetz verbunden zu werden, **dadurch gekennzeichnet, dass** es eine Vorrichtung (100) zur Ausgabe einer lokalisierten Nachricht nach Anspruch 3 aufweist.

5. Verfahren zum Verarbeiten mindestens einer "lokalisierten" Nachricht, die für einen Benutzer eines mit einem Telekommunikationsnetz verbundenen mobilen Endgeräts bestimmt ist, wobei das Verfahren von einem Server des Netzes durchgeführt werden soll, der geeignet ist, die mindestens eine lokalisierte Nachricht von einem mit dem Netz verbundenen Sende-Endgerät zu empfangen, **dadurch gekennzeichnet, dass** es die folgenden Schritte aufweist:
- Senden (T2) von mindestens einem Kopf der mindestens einen lokalisierten Nachricht (HD) an das mobile Empfängerendgerät, wobei der Kopf mindestens eine Information aufweist, die repräsentativ für eine Ausgabezone der mindestens einen lokalisierten Nachricht ist;
- beim Empfangen einer Anforderung von dem Endgerät zum Übertragen des Inhalts der mindestens einen Nachricht, Übertragen (T4) des Inhalts an das Endgerät.

6. Vorrichtung (200) zum Verarbeiten mindestens einer "lokalisierten" Nachricht, die für einen Benutzer (B) eines mit einem Telekommunikationsnetz (R) verbundenen Endgeräts (UE_{B}) bestimmt ist, wobei die Vorrichtung von einem Server des Netzes durchgeführt werden soll, der geeignet ist, die mindestens eine lokalisierte Nachricht von einem mit dem Netz verbundenen Sende-Endgerät zu empfangen, **dadurch gekennzeichnet, dass** sie die Mittel zum Durchführen der folgenden Schritte aufweist:
- Senden von mindestens einem Kopf der mindestens einen lokalisierten Nachricht (HD) an das mobile Empfängerendgerät, wobei der Kopf mindestens eine Information aufweist, die repräsentativ für eine Ausgabezone der mindestens einen lokalisierten Nachricht ist;
- beim Empfangen einer Anforderung von dem Empfängerendgerät zum Übertragen des Inhalts, Übertragen des Inhalts der mindestens einen Nachricht an das Endgerät.

7. Zentraler Server eines Telekommunikationsnetzes, **dadurch gekennzeichnet, dass** er eine Vorrichtung zum Verarbeiten mindestens einer lokalisierten Nachricht nach Anspruch 6 aufweist.

8. System zum Verarbeiten mindestens einer lokalisierten Nachricht, die für einen Benutzer eines mit einem Telekommunikationsnetz (R) verbundenen Endgeräts bestimmt ist, wobei die Nachricht von einem Sende-Endgerät über einen zentralen Server empfangen wird, **dadurch gekennzeichnet, dass** es einen zentralen Server nach Anspruch 7 und mindestens zwei Benutzerendgeräte (UE_{A}, UE_{B}) nach Anspruch 4 aufweist.

9. Computerprogramm (Pg₁), **dadurch gekennzeichnet, dass** es Anweisungen aufweist, die beim Ausführen des Programms durch einen Computer zum Durchführen der Schritte des Verfahrens zur Ausgabe mindestens einer lokalisierten Nachricht an ein Endgerät des Empfängerbenutzers nach den Ansprüchen 1 bis 3 führen.

10. Computerprogramm (Pg₂), **dadurch gekennzeichnet, dass** es Anweisungen aufweist, die beim Ausführen des Programms durch einen Computer zum Durchführen der Schritte des Verfahrens zum Verarbeiten mindestens einer lokalisierten Nachricht an ein Benutzerendgerät nach Anspruch 5 führen.

## Claims

1. Method for delivering at least one so-called "localized" message (M) to a user recipient (B) of a terminal (UE_{B}) connected to a telecommunications network (R), such a message being associated with a delivery area (Z_{D}), said method being **characterized in that** it comprises the following steps, implemented by the terminal of the recipient, said terminal comprising first location means and second location means:
- reception (D1) of at least one header of said at least one localized message (HD), said header comprising at least one item of information representative of the delivery area associated with said at least one localized message;
- obtaining (D2) of a first location area (Z₁) of the terminal of the user using the first location means of said terminal;
- when an intersection between the first location area of the terminal and the delivery area of said at least one localized message is not empty, obtaining of a second location area (Z₂) of the terminal, more specific than the first,
- requesting the transfer of the content of said at least one localized message from a central server of a telecommunications network to the terminal and delivery of the content transferred by the central server, when an intersection between the second location area of the terminal obtained and the geographic area of delivery of the localized message is not empty; and
- deactivation (D10) of the second location means, when the delivery area of said at least one localized message and the first location area of the terminal present an empty intersection.

2. Method for delivering a localized message according to Claim **1, characterized in that** the step of obtaining of at least one item of information representative of the delivery area associated with said at least one localized message comprises a step of obtaining of a list (L) comprising a plurality of headers of localized messages intended for said user.

3. Device (100) for delivering a so-called "localized" message to a user recipient of a mobile terminal connected to a telecommunications network, said mobile terminal comprising first means and second means for locating said terminal, said device being **characterized in that** it comprises the following means, that can be implemented by the terminal of the recipient:
- reception (D1) of at least one header of said at least one localized message (HD), said header comprising at least one item of information representative of the delivery area associated with said at least one localized message;
- obtaining of a first location area of the terminal of the user using the first location means of said terminal;
- when an intersection between the first location area of the terminal and the delivery area of said at least one localized message is not empty, obtaining of a second location area (Z₂) of the terminal, more specific than the first,
- requesting a transfer of the content of said at least one localized message from a central server of a telecommunications network to the terminal and delivery of content transferred by the central server, when an intersection between the second location area of the terminal obtained and the geographic area of delivery of the localized message is not empty; and
- deactivation (D10) of the second location means, when the delivery area of said at least one localized message and the first location area of the terminal present an empty intersection.

4. User terminal (UE_{B}) that can be connected to a mobile telecommunications network, **characterized in that** it comprises a device (100) for delivering a localized message according to Claim **3.**

5. Method for processing at least one so-called "localized" message intended for a user of a mobile terminal connected to a telecommunications network, said method being intended to be implemented by a server of said network that can receive said at least one localized message from a sending terminal connected to said network, **characterized in that** it comprises the following steps:
- sending (T2) to said recipient mobile terminal of at least one header of said at least one localized message (HD), said header comprising at least one item of information representative of a delivery area of said at least one localized message;
- on reception of a request for transfer of the content of said at least one message from said terminal, transferring (T4) of the content to the terminal.

6. Device (200) for processing at least one so-called "localized" message intended for a user (B) of a terminal (UE_{B}) connected to a telecommunications network (R), said device being intended to be implemented by a server of said network that can receive said at least one localized message from a sending terminal connected to said network, **characterized in that** it comprises means for implementing the following steps:
- sending to said recipient mobile terminal of at least one header of said at least one localized message (HD), said header comprising at least one item of information representative of a delivery area of said at least one localized message;
- on reception of a request for transfer of the content from said recipient terminal, transferring of the content of said at least one message to the recipient terminal.

7. Central server of a telecommunications network, **characterized in that** it comprises a device for processing at least one localized message according to Claim **6.**

8. System for processing at least one localized message intended for a user of a user terminal connected to a telecommunications network (R), said message being received from a sending terminal by a central server, **characterized in that** it comprises a central server according to Claim **7** and at least two user terminals (UE_{A}, UE_{B}) according to Claim **4.**

9. Computer programme (Pg₁), **characterized in that** it comprises instructions which, when the programme is run by a computer, lead to the implementation of the steps of the method for delivering at least one localized message to a recipient user terminal according to Claims **1** to **3.**

10. Computer programme (Pg₂), **characterized in that** it comprises instructions which, when the programme is run by a computer, lead to the implementation of the steps of the method for processing at least one localized message intended for a user terminal according to Claim **5.**
